# FASCICULE DE BREVET EUROPEEN

(11) **EP 2 425 696 B1**
(45) Date de publication et mention de la délivrance du brevet: **04.04.2018**
(21) Numéro de dépôt: 11180032.2
(22) Date de dépôt: 05.09.2011
(51) Int. Cl.: A01B 3/42, A01B 61/04, A01B 63/00

(54) **Charrue avec un dispositif pour soulever au moins un age**
Pflug mit einer Vorrichtung zum Heben mindestens eines Pflugschars
Plough with a device to lift at least one beam

(30) Priorité: 06.09.2010 FR 1057037
(43) Date de publication de la demande: 07.03.2012
(73) Titulaire: Kuhn-Huard S.A., 44142 Châteaubriant (FR)
(72) Inventeur: Herault, Vincent, 44470 Mauves sur Loire (FR); Cueille, Laurent, 44110 Erbray (FR)
(74) Mandataire: Esch, Esther Evelyne

(56) Documents cités:
- EP-A2- 0 169 619
- EP-A2- 0 516 004
- FR-A1- 2 445 099
- GB-A- 1 483 834
- GB-A- 2 259 839

## Description

La présente invention se rapporte au domaine technique général du machinisme agricole et en particulier au domaine des charrues. L'invention concerne une charrue présentant un bâti sur lequel est monté au moins un age au moyen d'un boîtier respectif, l'age comporte à son extrémité avant un axe de rotation destiné à prendre appui contre une portée ménagée dans ledit boîtier, le maintien dudit age contre ledit boîtier étant assuré par un tirant contraint en traction par l'action d'un vérin.

Actuellement, la taille de la charrue est définie par la puissance et la capacité de relevage du tracteur d'une part, et d'autre part par les conditions de sol des différentes parcelles de l'exploitation. Les parcelles de l'exploitation sont différentes par leur forme, leur relief et leurs types de sols. La capacité de relevage du tracteur détermine le poids maximal et donc le nombre de corps maximal de la charrue. La puissance du tracteur permet de juger le nombre de corps possible dans des conditions de travail données. Un corps absorbe de 20 à 40 cv selon la profondeur de labour et la cohésion du sol. La puissance absorbée par la charrue est donc variable selon les parcelles. Le choix du nombre de corps de labour est réduit à cause des sols argileux dits lourds qui demandent une puissance de traction élevée de 40 à 45 cv par corps. Ainsi, les parcelles à sols lourds pénalisent fortement la productivité de la charrue dans une ferme avec des parcelles majoritairement à sols légers.

Il est connu de pouvoir adapter le nombre de corps de labour travaillant aux conditions de travail avec une charrue semi-portée. Une telle charrue comporte des corps de labour qui sont répartis entre une partie avant et une partie arrière. Un chariot avec des roues s'étend entre les parties avant et arrière. Avec ces charrues de grande longueur, il est possible de relever totalement les corps de la partie arrière dans des passages difficiles et/ou pour les finitions des champs. Ainsi, seuls les corps avant travaillent sur des terrains en pente par exemple et toute la partie arrière est relevée. Généralement une partie arrière de charrue porte trois voire quatre corps de labour. En conséquence, ce sont tous les trois voire quatre corps qui sont relevés et qui ne labourent pas. L'adaptation du nombre de corps par rapport aux conditions et au sol est donc approximative, mais pas optimale.

On connait aussi les charrues avec des sécurités non-stop hydrauliques qui permettent momentanément le pivotement de l'age pour dégager le corps de labour qui rencontre un obstacle. Une machine de ce genre comporte des ages montés sur un bâti via un boîtier respectif. L'extrémité avant de l'age comporte un axe de rotation destiné à prendre appui contre une portée ménagée dans ledit boîtier, cet axe réalise l'axe de basculement pour la sécurité. L'age est maintenu contre ledit boîtier par un tirant contraint en traction par un vérin lors du labour. Le vérin fait partie du mécanisme oléo-pneumatique réalisant la sécurité non-stop hydraulique. Ce mécanisme permet au corps qui rencontre un obstacle de basculer vers l'arrière et de reprendre automatiquement sa position en terre lorsque l'obstacle est passé. Pour cela, le mécanisme oléo-pneumatique comporte également un élément amortisseur constitué d'un accumulateur à réservoir d'azote sous pression. L'accumulateur permet de ramener l'age et le corps de labour dans leur position de travail. Grâce à l'accumulateur, l'age se réenclenche immédiatement après l'obstacle sans intervention du conducteur et sans l'arrêt du tracteur. Ainsi, l'age se soulève uniquement lorsque le corps rencontre un obstacle au cours du labour. La sécurité non-stop hydraulique ne permet pas de maintenir un corps hors du sol sans la présence d'un obstacle. Le document GB 2 259 839 divulgue une charrue avec un tel dispositif de sécurité agissant automatiquement en cas de surcharge et de présence de pierres.

La présente invention a pour but de remédier aux inconvénients précités. Elle doit notamment proposer une charrue dont le nombre de corps de labour travaillant peut être adapté volontairement en fonction de la parcelle à labourer et en fonction du tracteur.

A cet effet, l'invention propose une charrue avec les caractéristiques de la revendication 1. Une importante caractéristique de l'invention consiste en ce que ladite charrue présente un dispositif qui permet de soulever volontairement l'age en le faisant pivoter autour d'un axe correspondant sensiblement à l'axe de rotation. Grâce à ce dispositif, la position de l'age correspondant sur le bâti peut être commandée et le nombre de corps travaillant peut être réduit ou augmenté volontairement. Ainsi, le nombre de corps sera modifié en fonction de la nature du sol pour que la puissance totale absorbée par les corps travaillant s'approche au plus près de la puissance maximum du tracteur.

Selon une autre caractéristique, tous les ages sont équipés du dispositif selon l'invention. De cette manière, les entrées et les sorties de raie sont facilitées et les zones non labourées sont réduites. Chaque age est commandé individuellement et pourra entrer et sortir du sol selon une ligne.

D'autres caractéristiques et avantages de l'invention se dégageront de la description qui va suivre en regard des dessins annexés qui ne sont donnés qu'à titre d'exemples non limitatifs de l'invention avec référence. Sur ces dessins :
- la **figure 1** est une vue latérale d'une charrue selon la présente invention en position de travail dont le dernier corps est maintenu hors du sol,
- la **figure 2** représente, vu de coté, un age de charrue en travail,
- la **figure 3** représente, vu de coté, un age de charrue en position relevée,
- la **figure 4** illustre en vue de dessus une entrée de raie avec une charrue selon l'invention,
- la **figure 5** est une vue latérale de la charrue de la figure 4.

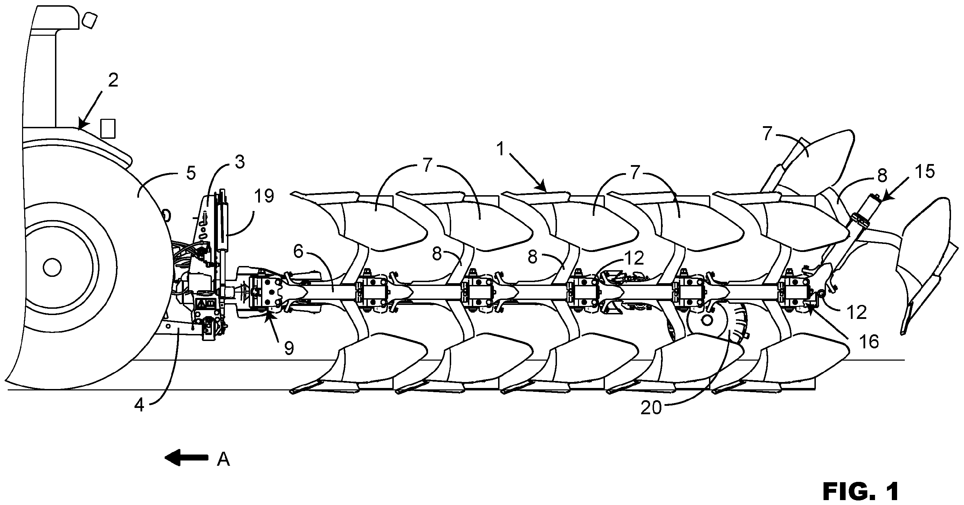

La machine agricole représentée sur la figure 1 est une charrue (1). La charrue (1) est destinée à être reliée à un tracteur (2) au moyen d'une tête d'attelage (3). La charrue (1) est reliée en particulier à l'attelage (4) du tracteur (2). Seule la partie arrière du tracteur (2) et ses roues arrière (5) sont visibles sur la figure 1. Le tracteur (2) tire la charrue (1) suivant une direction d'avance indiquée par la flèche (A). Dans la suite de la description, les notions suivantes "avant", "arrière" et "devant", "derrière" sont définies par rapport au sens d'avance (A). La charrue (1) présente aussi un bâti (6), des corps de labour (7), des pièces de liaison entre le bâti (6) et les corps de labour (7), des dispositifs de sécurité qui ont pour rôle lors d'un choc avec un obstacle d'éviter la rupture d'une pièce essentielle de la charrue (1), et des dispositifs de réglage. Le bâti (6) porte généralement plusieurs corps de labour (7) qui sont des pièces travaillantes qui découpent, soulèvent et retournent la bande de terre. Chaque corps de labour (7) est relié de façon rigide au bâti (6) de la charrue (1) par l'intermédiaire d'un age (8) et d'un boîtier (9) respectifs. La charrue (1) représentée à la figure 1 est une charrue portée, elle est reliée au tracteur (2) par l'attelage trois points commandé par le relevage hydraulique du tracteur. Elle est réversible et est équipée de six corps de labour (7).

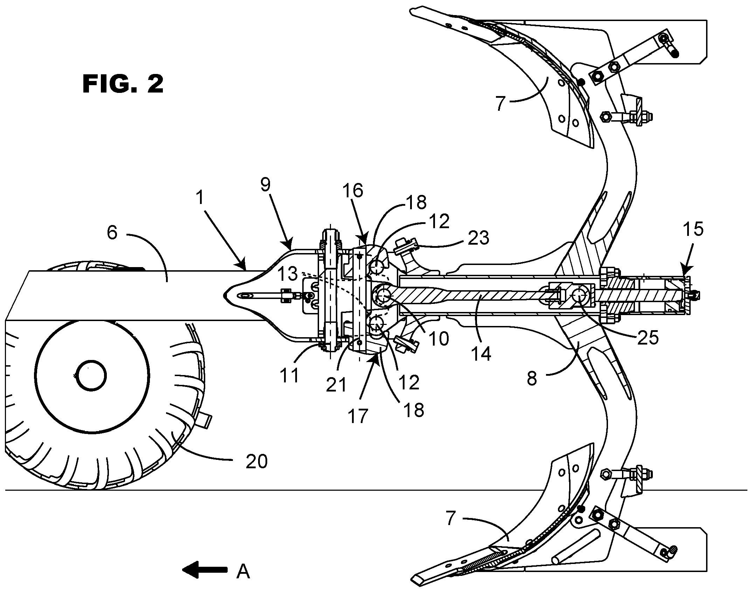

La figure 2 montre plus en détail, un age (8) monté sur le bâti (6) avec un boîtier (9) respectif. L'age est relié au bâti (6) par une articulation horizontale (10) d'axe sensiblement horizontal et perpendiculaire au travail. Le boîtier (9) est relié au bâti (6) par une articulation verticale (11) d'axe sensiblement vertical au travail. L'age (8) comporte à son extrémité avant un axe de rotation (12) destiné à prendre appui contre une portée (13) ménagée dans ledit boîtier (9). L'axe de rotation (12) est sensiblement parallèle à l'axe de l'articulation horizontale (10). Un tirant (14) maintient l'age (8) contre la portée (13) du boîtier (9). Le tirant (14) est contraint en traction par l'action d'un vérin (15) ce qui permet au corps de labour (7) de rester dans le sol. Chaque age (8) est équipé d'un dispositif de sécurité non-stop hydraulique lui permettant de pivoter vers le haut lorsque le corps de labour (7) bute contre un obstacle formé par une roche. Une extrémité du tirant (14) est liée à l'articulation horizontale (10) et l'autre extrémité est reliée au vérin (15) par une autre articulation (25). Le vérin (15) tire sur le tirant (14) pour maintenir l'age (8) dans une position de travail.

Selon une importante caractéristique de l'invention, la charrue (1) comporte un dispositif (16) pour soulever volontairement un age (8) par pivotement autour d'un axe correspondant sensiblement audit axe de rotation (12). Grâce à ce dispositif (16), ledit age (8) peut être escamoté de manière volontaire ou intentionnelle sans modifier la position du bâti (6) de la charrue (1). Ainsi, le nombre de corps de labour travaillant de la charrue peut être réduit volontairement pour s'adapter aux conditions du sol. En plus d'un déclenchement en cas de surcharge ou de rencontre avec un obstacle durant le labour, l'utilisateur peut réduire le nombre de corps de labour en soulevant l'age correspondant.

Dans l'exemple de réalisation de la figure 1, le dernier age (8) est équipé du dispositif (16) permettant de le soulever et de le maintenir hors du sol. Il est escamoté c'est-à-dire pivoté dans le sens anti-horaire par rapport au bâti (6). Ainsi, la charrue (1) travaille uniquement avec cinq corps alors qu'elle en supporte six. Le dernier age (8) avec le ou les corps de labour (7) qu'il porte pourra être maintenu hors du sol pour un labour en conditions difficiles. Grâce à l'invention, le nombre de corps pourra être modifié en fonction des conditions du sol pour que la puissance totale absorbée par les corps travaillant puisse coïncider ou s'approcher au plus près de la puissance maximale développée par le tracteur. La figure 2 représente le dernier age (8) dans sa position de travail et le tirant (14) sensiblement aligné avec le bâti (6) de la charrue (1).

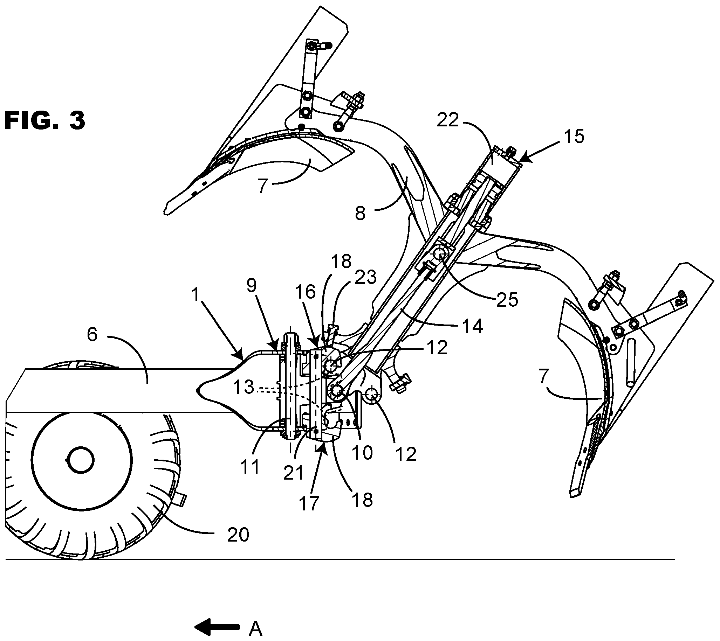

La figure 3 représente le dernier age (8) dans une position pivotée, les corps de labour (7) sont hors du sol. On remarque que le tirant (14) de l'age (8) a pivoté par rapport au bâti (6) de la charrue (1). Le bâti (6) demeure sensiblement parallèle à la surface du sol. Ainsi, la structure de la charrue (1) n'a pas été déplacée, c'est uniquement l'age (8) équipé du dispositif (16) qui a pivoté. Le soulèvement de l'age (8) est obtenu par la poussée dudit tirant (14) sur ledit boîtier (9). Cette poussée permet de faire pivoter l'age (8) vers le haut autour de l'axe de rotation (12). Le dispositif (16), pour soulever l'age (8), présente, à cet effet, un vérin à double effet. D'une manière avantageuse, le vérin (15) relié au tirant (14) est réalisé sous la forme d'un vérin à double effet. C'est donc le vérin (15) à double effet qui pousse sur le tirant (14) pour faire pivoter l'age (8) hors du sol. La grande chambre du vérin (15) est alimentée en huile dans le but de soulever l'age (8) par pivotement et le maintenir hors du sol. Le dispositif (16) pour soulever l'age (8), notamment le vérin (15) à double effet, est commandé depuis la cabine du tracteur (2).

Selon une autre importante caractéristique, ledit dispositif (16) présente également un système de maintien (17) pour maintenir l'axe de rotation (12) contre la portée (13) du boîtier (9). De cette manière, le guidage du pivotement de l'age (8) est assuré puisque l'axe de rotation (12) ne peut pas se décoller de la portée (13) du boîtier (9). Le système de maintien (17) comporte, à cet effet, un crochet (18). Le crochet (18) s'étend sensiblement au-dessus de l'axe de rotation (12) et est susceptible de coopérer avec une partie de la périphérie de l'axe de rotation (12). Le crochet (18) coopère avec la demi-partie supérieure de l'axe de rotation (12). Le crochet (18) est également configuré pour permettre un débattement latéral d'environ 6° au cas où le corps (7) rencontre une roche par le côté. Le système de maintien (17) est lié de préférence au boîtier (9). Ainsi, le pivotement de l'age (8) se fait autour d'un axe correspondant sensiblement à l'axe de rotation (12).

La charrue (1) représentée sur les figures est réversible, ainsi chaque age (8) porte un corps de labour droit et un corps de labour gauche. Les corps sont symétriques par rapport à un plan horizontal passant par l'articulation horizontale (10). Le bâti (6) pivote de 180° pour que les corps de labour travaillent en alternance, il comporte un dispositif de retournement (19). La charrue (1) présente aussi une roue de profondeur (20). Cette roue (20) est montée à l'arrière du bâti (6) et garantit un contrôle de la profondeur de travail en complément de l'attelage (4) du tracteur (2).

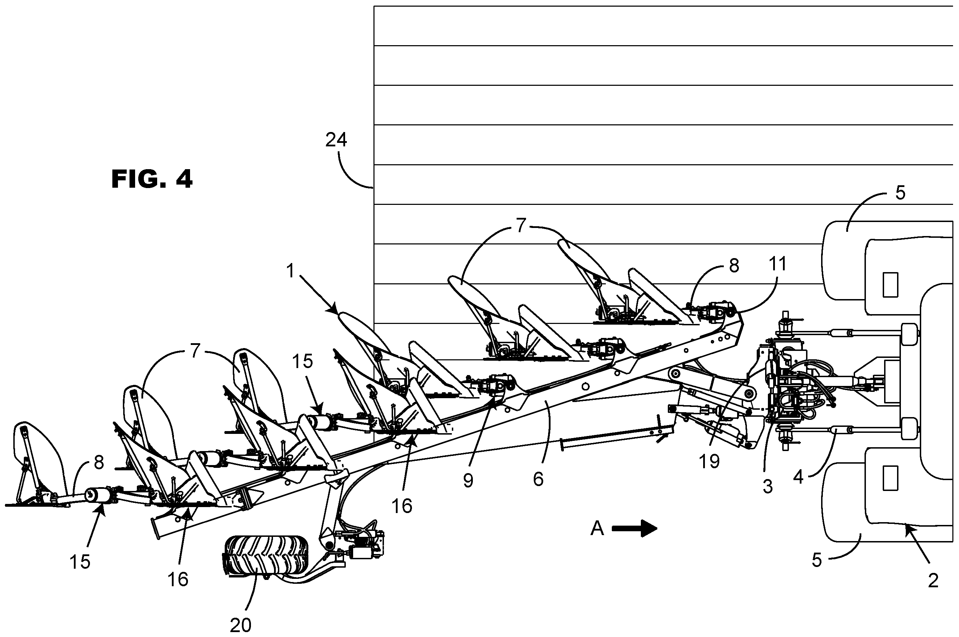

A la lumière de la figure 2, on remarque que l'extrémité avant de l'age (8) présente deux axes de rotation (12). Un axe de rotation supérieur et un axe de rotation inférieur. Chacun est destiné à prendre appui contre une portée (13) respective ménagée dans le boîtier (9). L'axe de rotation supérieur s'étend au-dessus de l'axe de rotation inférieur, ils sont symétriques par rapport au plan horizontal passant par l'articulation horizontale (10). Dans la position de travail représentée, le vérin (15) exerce une traction sur le tirant (14) pour que les deux axes de rotation restent en appui contre les portées (13) du boîtier (9). Les axes de rotation (12) s'étendent en avant de l'axe de l'articulation horizontale (10). Le vérin (15) permet aussi de réaliser la sécurité non-stop hydraulique c'est-à-dire que l'age (8) peut se dégager en sortant de terre momentanément lorsque le corps de labour (7) heurte un obstacle puis retourne en terre dès que l'obstacle est passé. La plage de déclenchement de la sécurité sur l'age (8) est réglable. Les portées (13) sont représentées en traits discontinus sur les figures 3 et 4. Ces portées (13) sont semi-cylindriques et ménagées dans le boîtier (9). Selon une alternative non représentée, les portées (13) cylindriques sont réalisées sur l'age et les axes de rotation (12) sont réalisés sur le boîtier (9). Alternativement, les portées (13) pourraient être sphériques. Le tirant (14) représenté s'étend dans l'age (8), il s'agit d'un tirant central. Selon une alternative, le tirant est placé à l'extérieur de l'age.

Ainsi, le système de maintien (17) comporte deux crochets (18). Les deux crochets (18) sont reliés par un axe cylindrique (21). Ils sont montés sur le boîtier (9). Le système de maintien (17) comporte un crochet supérieur et un crochet inférieur. Ledit crochet inférieur s'étend en dessous et sensiblement à la verticale dudit crochet supérieur. Le mouvement dudit crochet inférieur est combiné au mouvement dudit crochet supérieur par l'intermédiaire de l'axe cylindrique (21). L'axe cylindrique (21) et les crochets (18) se déplacent dans le boîtier (9).

Le système de maintien (17) est configuré de manière à ce que lorsque le crochet supérieur est actif, le crochet inférieur est inactif, et inversement. Il est donc adapté à une charrue réversible dont les corps de labour (7) travaillent alternativement. L'activation du système de maintien (17) se fait automatiquement en fonction des corps qui vont travailler. Le crochet (18) adéquat se met en place par gravité. Selon une alternative non représentée, l'activation du système de maintien (17) et notamment du crochet (18) approprié est motorisée. Dans l'exemple représenté à la figure 2, le crochet supérieur est actif lors du labour à droite. Le crochet inférieur étant actif lors du labour à gauche. La distance séparant le crochet supérieur et le crochet inférieur est constante et cette distance est supérieure à l'écartement entre l'axe de rotation supérieur et l'axe de rotation inférieur de l'age (8). La partie arrière du crochet (18) n'est en contact avec aucune pièce ce qui permet à l'age (8) de se déplacer latéralement en cas de contact avec une roche sur le côté du corps de labour (7). Avec le crochet supérieur qui maintient l'axe de rotation supérieur contre la portée supérieure, le mouvement de pivotement de l'age (8) autour de l'axe de rotation supérieur est guidé lors du soulèvement comme lors de l'abaissement. Par ailleurs comme le crochet inférieur est inactif, l'age (8) ne pourra pivoter que autour l'axe de rotation supérieur lorsque le vérin (15) poussera.

La figure 3 représente le dernier age (8) de la charrue (1) qui est soulevé. Pour cela, la grande chambre (22) du vérin (15) à double effet a été alimentée et le vérin (15) s'est étendu pour faire pivoter l'age (8) autour de l'axe de rotation supérieur. Les conduites d'alimentation en huile pour les vérins (15) ne sont pas représentées sur les figures. Comme le crochet supérieur est actif, en prise sur l'axe de rotation supérieur, l'axe de rotation inférieur s'est décollé de la portée inférieure du boîtier (9) pour permettre le pivotement. Lorsque la tige du vérin (15) est entièrement sortie, les corps de labour (7) s'étendent au-dessus de la surface du sol et ne retourneront donc pas la terre. Pour que le crochet (18) reste actif lorsque l'age (8) est soulevé, celui-ci est appuyé contre l'axe de rotation (12) par une sécurité (23). La sécurité (23) s'étend sur l'age (8) et est réalisée par une vis réglable qui vient s'appuyer sur la partie supérieure du crochet (18).

La charrue (1) de la figure 1 illustre une solution avec le dernier age (8) soulevé. Les corps de labour (7) de cet age (8) restent au dessus de la surface du sol. Il est aussi possible d'équiper les deux voire trois derniers ages (8) de la charrue (1) d'un dispositif (16) pour soulever l'age. Ceci permet d'utiliser momentanément une charrue à six corps dans des conditions très difficiles en réduisant le nombre de corps travaillant seulement à quatre ou trois corps.

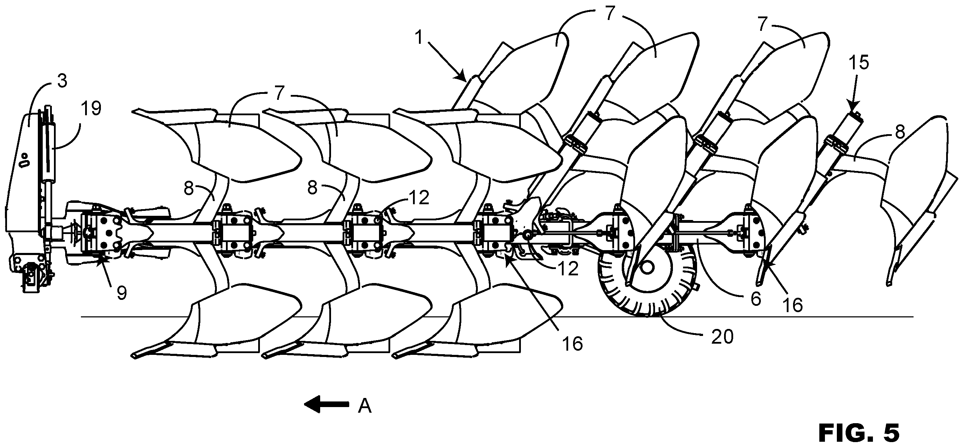

Dans l'exemple de réalisation des figures 4 et 5, tous les ages (8) de la charrue (1) sont équipés d'un dispositif (16) pour soulever l'age (8). Chaque age (8) peut ainsi être soulevé de manière intentionnelle, ceci permet de raccourcir les fourrières lors des retournements en bout de parcelle. Les fourrières sont des bandes de 5 à 10 mètres où tourne le tracteur en bout de parcelle. Dès que la parcelle est labourée, ces fourrières doivent être reprises par des sillons perpendiculaires aux sillons principaux. Ces fourrières présentent généralement une alternance de zones triangulaires qui sont labourées et de zones triangulaires qui ne sont pas labourées. Avec la charrue (1) de l'invention, l'entrée en terre et la sortie de terre de chaque age (8) sont gérées individuellement pour réduire au minimum la largeur des fourrières. La figure 4 représente une charrue (1) dans une position d'entrée en raie avec trois corps en travail et trois corps qui sont encore soulevés. L'entrée et la sortie de raie se font suivant une ligne droite (24) car tous les corps (7) rentrent en terre et sortent de terre, les uns après les autres, dès qu'ils arrivent au niveau de la même ligne perpendiculaire à l'avancement. Les sillons des corps de labour (7) sont schématisés par des traits qui débutent par la ligne droite (24). Avec une bande de fourrière droite (sans triangle), le nombre de passage de reprise en travers est réduit et les finitions sont bien plus simples. La figure 5 est une vue de côté de la charrue (1) représentée sur la figure 4. L'entrée en terre des trois derniers corps se fait au fur et à mesure par l'actionnement du vérin (15) à double effet de chaque age (8). Les entrées et sorties de raies sont donc raccourcies. On remarque que le bâti (6) reste sensiblement parallèle à la surface du sol.

La position de chaque age (8) sur le bâti (6) étant connue, il est possible de coordonner l'entrée ou la sortie de chaque age (8) en fonction de la vitesse d'avancement du tracteur. Avec une gestion automatique via l'électronique, la commande des différents ages (8) de la charrue (1) ne dépend pas de l'expérience ni de la technicité de l'utilisateur.

Selon une alternative, la position des différents ages est commandée automatiquement en fonction de leur position et d'une ligne imaginaire enregistrée dans un GPS.

La charrue de l'invention peut être une charrue simple donc non réversible. Dans ce cas, le dispositif de maintien (17) présente uniquement un crochet (18) dont la position sera fixe sur l'axe de rotation (12). La charrue de l'invention pourra également être une charrue semi-portée ou traînée.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Charrue (1) présentant un bâti (6) sur lequel est monté au moins un age (8) au moyen d'un boîtier respectif (9), l'age (8) comporte à son extrémité avant un axe de rotation (12) destiné à prendre appui contre une portée (13) ménagée dans ledit boîtier (9), le maintien dudit age (8) contre ledit boîtier (9) étant assuré par un tirant (14) contraint en traction par l'action d'un vérin (15), la charrue (1) présentant des corps de labour (7) reliés de façon rigide au bâti (6) de la charrue (1) par l'intermédiaire d'un age (8) et d'un boîtier (9) respectifs, ***caractérisée en ce qu'***elle comporte un dispositif (16) pour soulever volontairement un age (8) par pivotement autour d'un axe correspondant sensiblement audit axe de rotation (12) de manière à réduire volontairement le nombre de corps de labour (7) travaillant pour s'adapter aux conditions du sol et/ou pour raccourcir les fourrières lors des retournements en bout de parcelle, le dispositif (16) pour soulever l'age (8) est commandé depuis la cabine du tracteur (2).

2. Charrue selon la revendication 1, ***caractérisée en ce que*** le soulèvement de l'age (8) est obtenu par la poussée dudit tirant (14) sur ledit boîtier (9).

3. Charrue selon la revendication 1 ou 2, ***caractérisée en ce que*** ledit dispositif (16) présente un vérin (15) à double effet et que la grande chambre (22) dudit vérin (15) est alimentée pour soulever et maintenir l'age (8) en dehors du sol.

4. Charrue selon l'une quelconque des revendications 1 à 3, ***caractérisée en ce que*** la commande dudit vérin (15) est réalisée depuis un tracteur (2).

5. Charrue selon l'une quelconque des revendications 1 à 4, ***caractérisée en ce que*** ledit dispositif (16) présente un système de maintien (17) pour maintenir l'axe de rotation (12) contre la portée (13) dudit boîtier (9).

6. Charrue selon la revendication 5, ***caractérisée en ce que*** ledit système de maintien (17) présente au moins un crochet (18).

7. Charrue selon la revendication 6, ***caractérisée en ce que*** ledit crochet (18) s'étend sensiblement au-dessus dudit axe de rotation (12) et est susceptible de coopérer avec une partie de la périphérie dudit axe de rotation (12).

8. Charrue selon l'une quelconque des revendications 5 à 7, ***caractérisée en ce que*** ledit système de maintien (17) présente un crochet supérieur et un crochet inférieur et que lorsque ledit crochet supérieur est actif, ledit crochet inférieur est inactif, et inversement.

9. Charrue selon la revendication 8, ***caractérisée en ce que*** ledit crochet inférieur s'étend en dessous et sensiblement à la verticale dudit crochet supérieur et que le mouvement dudit crochet inférieur est combiné au mouvement dudit crochet supérieur.

10. Charrue selon l'une quelconque des revendications 5 à 9, ***caractérisée en ce que*** ledit système de maintien (17) est monté sur ledit boîtier (9).

11. Charrue selon l'une quelconque des revendications 1 à 10, ***caractérisée en ce que*** chaque age (8) présente un dispositif (16) pour soulever l'age correspondant.

## Patentansprüche

1. Pflug (1), der ein Gestell (6) aufweist, auf dem mindestens ein Grindel (8) mittels eines jeweiligen Kastens (9) angebracht ist, der Grindel (8) umfasst an seinem Vorderende eine Drehachse (12), die dazu bestimmt ist, sich gegen eine Stütze (13) zu stützen, die in dem Kasten (9) vorhanden ist, wobei der Halt des Grindels (8) gegen den Kasten (9) von einer Spannstange (14) sichergestellt wird, die durch die Wirkung eines Zylinders (15) unter Zugspannung steht, wobei der Pflug (1) Pflugkörper (7) aufweist, die starr mit dem Gestell (6) des Pfluges (1) mittels eines jeweiligen Grindels (8) und Kastens (9) verbunden sind, ***dadurch gekennzeichnet, dass*** er eine Vorrichtung (16) zum absichtlichen Anheben eines Grindels (8) durch Schwenken um eine Achse umfasst, die im Wesentlichen der Drehachse (12) entspricht, um die Anzahl der arbeitenden Pflugkörper (7) absichtlich zu verringern, um sich den Bodenverhältnissen anzupassen und/oder die Vorgewende beim Wenden am Parzellenende zu verkürzen, die Vorrichtung (16) zum Anheben des Grindels (8) wird von der Schlepperkabine (2) aus gesteuert.

2. Pflug nach Anspruch 1, ***dadurch gekennzeichnet, dass*** das Anheben des Grindels (8) durch den Schub der Spannstange (14) auf den Kasten (9) erhalten wird.

3. Pflug nach Anspruch 1 oder 2, ***dadurch gekennzeichnet, dass*** die Vorrichtung (16) einen doppeltwirkenden Zylinder (15) aufweist und dass die große Kammer (22) des Zylinders (15) versorgt wird, um den Grindel (8) anzuheben und außerhalb des Bodens zu halten.

4. Pflug nach irgendeinem der Ansprüche 1 bis 3, ***dadurch gekennzeichnet, dass*** die Steuerung des Zylinders (15) von einem Schlepper (2) aus erfolgt.

5. Pflug nach irgendeinem der Ansprüche 1 bis 4, ***dadurch gekennzeichnet, dass*** die Vorrichtung (16) eine Haltevorrichtung (17) aufweist, um die Drehachse (12) gegen die Stütze (13) des Kastens (9) zu halten.

6. Pflug nach Anspruch 5, ***dadurch gekennzeichnet, dass*** die Haltevorrichtung (17) mindestens einen Haken (18) aufweist.

7. Pflug nach Anspruch 6, ***dadurch gekennzeichnet, dass*** sich der Haken (18) im Wesentlichen über der Drehachse (12) erstreckt und geeignet ist, mit einem Teil des Randes der Drehachse (12) zusammenzuwirken.

8. Pflug nach irgendeinem der Ansprüche 5 bis 7, ***dadurch gekennzeichnet, dass*** die Haltevorrichtung (17) einen oberen Haken und einen unteren Haken aufweist und dass, wenn der obere Haken aktiv ist, der untere Haken inaktiv ist, und umgekehrt.

9. Pflug nach Anspruch 8, ***dadurch gekennzeichnet, dass*** sich der untere Haken unterhalb und im Wesentlichen in der Vertikalen des oberen Hakens erstreckt und dass die Bewegung des unteren Hakens mit der Bewegung des oberen Hakens kombiniert ist.

10. Pflug nach irgendeinem der Ansprüche 5 bis 9, ***dadurch gekennzeichnet, dass*** die Haltevorrichtung (17) auf dem Kasten (9) angebracht ist.

11. Pflug nach irgendeinem der Ansprüche 1 bis 10, ***dadurch gekennzeichnet, dass*** jeder Grindel (8) eine Vorrichtung (16) zum Anheben des entsprechenden Grindels aufweist.

## Claims

1. Plough (1) including a frame (6) on which is mounted at least one leg (8) by means of a respective housing (9), the leg (8) including at its front end a rotation axis (12) intende to rest against a support (13) arranged in the said housing (9), the said leg (8) being held against the said housing (9) by a tie-rod (14) pulled by the action of a cylinder (15), the plough (1) having plough bodies (7) rigidly connected to the frame (6) of the plough (1) by means of a respective leg (8) and housing (9), ***characterised in that*** it includes a device (16) to intentionally raise a leg (8) by swivelling around an axis corresponding substantially to the said rotation axis (12), in order to intentionally reduce the number of operating plough bodies (7) to adapt to the soil conditions and/or to shorten the headland during turnarounds at the end of a plot, the device (16) to raise the leg (8) is controlled from the cab of the tractor (2).

2. Plough according to claim 1, ***characterised in that*** the raising of the leg (8) is achieved by the pressure of the said tie-rod (14) on the said housing (9).

3. Plough according to claim 1 or 2, ***characterised in that*** the said device (16) includes a double-acting cylinder (15) and that the large chamber (22) of the said cylinder (15) is supplied to raise and hold the leg (8) off the soil.

4. Plough according to any of the claims 1 to 3, ***characterised in that*** the said cylinder (15) is controlled from a tractor (2).

5. Plough according to any of the claims 1 to 4, ***characterised in that*** the said device (16) also includes a holding system (17) to hold the rotation axis (12) against the support (13) of the said housing (9).

6. Plough according to claim 5, ***characterised in that*** the said holding system (17) includes at least one hook (18).

7. Plough according to claim 6, ***characterised in that*** the said hook (18) extends substantially above the said rotation axis (12) and is liable to cooperate with a section of the periphery of the said rotation axis (12).

8. Plough according to any of the claims 5 to 7, ***characterised in that*** the said holding system (17) includes an upper hook and a lower hook and that when the said upper hook is active, the said lower hook is inactive, and vice versa.

9. Plough according to claim 8, ***characterised in that*** the said lower hook extends below and substantially vertical to the said upper hook and that the movement of the said lower hook is combined with the movement of the said upper hook.

10. Plough according to any of the claims 5 to 9, ***characterised in that*** the said holding system (17) is mounted on the said housing (9).

11. Plough according to any of the claims 1 to 10, ***characterised in that*** each leg (8) includes a device (16) to raise the corresponding leg.
